(19) Europäisches Patentamt / European Patent Office / Office européen des brevets

(11) **EP 3 733 752 B1**

(12) **EUROPEAN PATENT SPECIFICATION**

(45) Date of publication and mention
of the grant of the patent:
**06.05.2026  Bulletin 2026/19**

(21) Application number: **18895611.4**

(22) Date of filing: **18.12.2018**

(51) International Patent Classification (IPC):
*C08K 3/22* (2006.01)    *C08L 77/00* (2006.01)
*C08L 67/02* (2006.01)    *D01F 1/10* (2006.01)
*D01F 6/60* (2006.01)    *D01F 6/62* (2006.01)

(52) Cooperative Patent Classification (CPC):
(C-Sets available)
**D01F 1/103; C08L 67/02; C08L 77/06; D01F 6/60;
D01F 6/62;** C08K 3/015; C08K 2003/2296;
C08K 2201/003; C08K 2201/006    (Cont.)

(86) International application number:
**PCT/KR2018/016158**

(87) International publication number:
**WO 2019/132385 (04.07.2019 Gazette 2019/27)**

(54) **THERMOPLASTIC RESIN COMPOSITION AND MOLDED PRODUCT MANUFACTURED THEREFROM**

THERMOPLASTISCHE HARZZUSAMMENSETZUNG UND DARAUS HERGESTELLTES FORMPRODUKT

COMPOSITION DE RÉSINE THERMOPLASTIQUE ET PRODUIT MOULÉ FABRIQUÉ À PARTIR DE CELLE-CI

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.12.2017  KR 20170179228
19.11.2018  KR 20180142400**

(43) Date of publication of application:
**04.11.2020  Bulletin 2020/45**

(73) Proprietor: **Lotte Chemical Corporation**
**Seoul, 05551 (KR)**

(72) Inventors:
• **BAE, Seung Yong**
**Uiwang-Si Gyeonggi-do 16073 (KR)**
• **KIM, Yoen Kyoung**
**Uiwang-Si Gyeonggi-do 16073 (KR)**
• **KIM, Ju Sung**
**Uiwang-Si Gyeonggi-do 16073 (KR)**
• **YANG, Cheon Seok**
**Uiwang-Si Gyeonggi-do 16073 (KR)**

(74) Representative: **Germain Maureau**
**12, rue Boileau**
**69006 Lyon (FR)**

(56) References cited:
**EP-A1- 3 315 546      EP-A1- 3 560 902
JP-A- H10 251 444      KR-B1- 100 683 505
KR-B1- 101 334 283      KR-B1- 101 445 304**

• **PRASANNA, V. L.: "Insight into the Mechanism of Antibacterial Activity of ZnO: Surface Defects Mediated Reactive Oxygen Species Even in the Dark", LANGMUIR, 2015, pages 9155 - 9162, XP055570351, doi:10.1021/acs.langmuir.5b02266**

Remarks:
The file contains technical information submitted after the application was filed and not included in this specification

(52) Cooperative Patent Classification (CPC): (Cont.)

C-Sets
**C08K 3/22, C08L 67/02;**
**C08L 67/02, C08K 3/22, C08K 7/02, C08L 77/06;**
**C08L 67/02, C08K 3/22, C08L 77/06**

**Description**

[Technical Field]

The present invention relates to a thermoplastic resin composition and a molded product manufactured therefrom. More particularly, the present invention relates to a thermoplastic resin composition which has good weather resistance, antibacterial properties, and mechanical properties, and a molded product manufactured therefrom.

[Background Art]

Recently, with increasing interest in personal health and hygiene and increasing income level, there is increasing demand for thermoplastic resin products having antibacterial and hygienic functions. Accordingly, there is an increasing number of thermoplastic resin products subjected to antibacterial treatment to remove or inhibit bacterial growth on surfaces of household goods and electronic products. Therefore, development of a functional antibacterial material having stability and reliability (an antibacterial thermoplastic resin composition) is a very important challenge. In addition, with increasing interest in personal hygiene and beauty, there is increasing demand for oral hygiene products and beauty equipment, and the adoption of antibacterial materials, such as brushes with antibacterial bristles (antibacterial fiber) is increasing in the art.

In order to prepare such an antibacterial thermoplastic resin composition, it is necessary to add antibacterial agents. Such antibacterial agents may be divided into organic antibacterial agents and inorganic antibacterial agents.

Organic antibacterial agents are sometimes toxic to humans, are effective only against certain bacteria, and are likely to decompose and lose antibacterial properties upon processing at high temperature, despite being relatively inexpensive and providing good antimicrobial effects even in small amounts. In addition, since the organic antibacterial agents can cause discoloration after processing and cannot have long-term antibacterial persistence due to dissolution-related problems, the range of organic antibacterial agents applicable to an antibacterial thermoplastic resin composition is extremely limited.

Inorganic antibacterial agents are antibacterial agents containing metal components, such as silver (Ag) and copper (Cu), and are widely used in preparation of antibacterial thermoplastic resin compositions (antibacterial resins) due to good thermal stability thereof. However, since the inorganic antibacterial agents need to be used in large amounts due to lower antibacterial activity than the organic antibacterial agents and have disadvantages of relatively high price, difficulty in uniform dispersion upon processing, and discoloration due to the metal components, the inorganic antibacterial agents are used in a limited range of applications.

Therefore, there is a need for a thermoplastic resin composition which has good properties in terms of weather resistance (discoloration resistance), antibacterial effects, and antibacterial persistence while providing antifungal properties.

The background technique of the present invention is disclosed in Korean Patent No. 10-0696385 and the following documents:
EP3315546A1 (published on May 2, 2018) discloses a thermoplastic resin composition which exhibits good properties in terms of weather resistance and antibacterial resistance, said composition comprising a thermoplastic resin (100 parts by weight) comprising among others a polyamide resin and a polyester resin and zinc oxide (0.5-30 parts by weight) having a peak intensity ratio (B/A) of 0.1-10 wherein A indicates a peak in the wavelength range of 370 nm to 390 nm and B indicates a peak in the wavelength range of 450 nm to 600 nm in photoluminescence measurement; a peak position degree ($2\theta$) in the range of 35° to 37°; and a crystallite size of 1,000 Å to 2,000 Å in analysis of X-ray diffraction (XRD), as calculated by Equation 1:

$$\text{Crystallite size D} = \frac{K\lambda}{\beta\cos\theta}$$

wherein, K is a shape factor, $\lambda$ is an X-ray wavelength, $\beta$ is an FWHM value (degree) of an X-ray diffraction peak, and $\theta$ is a peak position degree.

EP3560902A1 (published on October 30, 2019) discloses a composition for artificial marble comprising a binder resin (100 parts by weight) which includes an acrylic resin and an unsaturated polyester resin, an inorganic filler (100-300 parts by weight) and zinc oxide (1-10 parts by weight) having a peak intensity ratio (B/A, as defined above) of 0.01-1, a peak position degree ($2\theta$) in the range of 35° to 37°; and a crystallite size of 1,000 Å to 2,000 Å in analysis of X-ray diffraction (XRD), as calculated by above-mentioned Equation 1.

JPH10251444A discloses a resin composition having antibacterial properties comprising a polymer material (100 parts by weight), a phosphoric ester compound (0.001-10 parts by weight) and a zinc oxide (0.001 to 10 parts by weight).

Prasanna VL, "Insight into the mechanism of antibacterial activity of ZnO: surface defects mediated reactive oxygen species even in the dark", Langmuir, 2015, pages 9155-9162, has evidenced that the surface charge density of ZnO in dark and light can influence antibacterial activity.

KR101445304B1 and KR101334283B1 disclose antibacterial fiber materials comprising a resin and zinc oxide.

KR100683505B1 discloses a polymer composition comprising a resin selected from polyethylene, polypropylene, polystyrene, polyamide, polyester and polycarbonates and silica-coated zinc oxide-containing powder and a molded article formed from this composition.

[Disclosure]

[Technical Problem]

It is one aspect of the present invention to provide a thermoplastic resin composition which has good weather resistance, antibacterial properties, and mechanical properties.

It is another aspect of the present invention to provide a molded product formed of the thermoplastic resin composition set forth above.

The above and other aspects of the present invention will become apparent from the detailed description of the following embodiments.

[Technical Solution]

1. One aspect of the present invention relates to a thermoplastic resin composition. The thermoplastic resin composition includes: about 100 parts by weight of a thermoplastic resin including at least one of a polyamide resin and a polyester resin; and about 1 part by weight to about 5 parts by weight of zinc oxide, wherein the zinc oxide has an average particle diameter (D50) of about 0.8 μm to about 3 μm, as measured using a particle size analyzer, and a peak intensity ratio (B/A) of about 0.01 to about 1.0, where A indicates a peak in the wavelength range of 370 nm to 390 nm and B indicates a peak in the wavelength range of 450 nm to 600 nm in photoluminescence measurement and a peak position degree (2θ) in the range of about 35° to about 37° and a crystallite size of about 1,000 Å to about 2,000 Å in X-ray diffraction (XRD) analysis, as calculated by Equation 1:

[Equation 1]

$$\text{Crystallite size (D)} = \frac{K\lambda}{\beta \cos \theta}$$

where K is a shape factor, λ is an X-ray wavelength, β is an FWHM value (degree) of an X-ray diffraction peak, and θ is a peak position degree,

wherein the polyamide resin includes an aliphatic polyamide resin, a semi-aromatic polyamide resin or a combination thereof and the polyester resin includes at least one of polyethylene terephthalate (PET), polybutylene terephthalate (PBT), polyethylene naphthalate (PEN), polytrimethylene terephthalate (PTT), and polycyclohexylene terephthalate.

In one embodiment, the zinc oxide may have a peak intensity ratio (B/A) of about 0.1 to about 1.0, where A indicates a peak in the wavelength range of 370 nm to 390 nm and B indicates a peak in the wavelength range of 450 nm to 600 nm in photoluminescence measurement.

In the above embodiment, the zinc oxide may have an average particle diameter (D50) of about 1 μm to about 5 μm, as measured using a particle size analyzer.

In the above embodiments, the zinc oxide may have a BET specific surface area of about 10 m²/g or less, as measured by a nitrogen gas adsorption method using a BET analyzer.

8. In the above embodiments, the zinc oxide may have a BET specific surface area of about 1 m²/g to about 7 m²/g, as measured by a nitrogen gas adsorption method using a BET analyzer.

9. In the above embodiments, the thermoplastic resin composition may have a color variation (ΔE) of about 2 to about 7, as calculated according to Equation 2 based on initial color values ($L_0^*$, $a_0^*$, $b_0^*$) measured on an injection-molded specimen having a size of 50 mm×90 mm×2.5 mm using a colorimeter and color values ($L_1^*$, $a_1^*$, $b_1^*$) of the specimen measured in the same manner as above after testing for 3,000 hours in accordance with ASTM D4459,

[Equation 2]

$$\text{Color variation } (\Delta E) = \sqrt{(\Delta L^*)^2 + (\Delta a^*)^2 + (\Delta b^*)^2}$$

where $\Delta L^*$ is a difference ($L_1^* - L_0^*$) between L* values before and after testing, $\Delta a^*$ is a difference ($a_1^* - a_0^*$) between a* values before and after testing, and $\Delta b^*$ is a difference ($b_1^* - b_0^*$) between b* values before and after testing.

In the above embodiments, the thermoplastic resin composition may have an antibacterial activity of about 2 to about 7 against each of *Staphylococcus aureus* and *Escherichia coli,* as calculated according to Equation 3 after inoculation of 5 cm×5 cm specimens with *Staphylococcus aureus* and *Escherichia coli,* respectively, and culturing under conditions of 35°C and 90% RH for 24 hours in accordance with JIS Z 2801,

[Equation 3]

$$\text{Antibacterial activity} = \log(M1/M2)$$

where M1 is the number of bacteria as measured on a blank specimen after culturing for 24 hours and M2 is the number of bacteria as measured on each of the specimens of the thermoplastic resin composition after culturing for 24 hours.

Another aspect of the present invention relates to a molded product. The molded product is formed of the thermoplastic resin composition according to any one of the above embodiments.

In one embodiment, the molded product may include synthetic fibers.

[Advantageous Effects]

The present invention provides a thermoplastic resin composition which has good weather resistance, antibacterial properties, and mechanical properties, and a molded product formed of the same.

[Best Mode]

Hereinafter, exemplary embodiments of the present invention will be described in detail.

A thermoplastic resin composition according to the present invention includes: (A) a thermoplastic resin; and (B) zinc oxide.

As used herein to represent a specific numerical range, the expression "a to b" means "≥ a and ≤ b".

(A) Thermoplastic resin

The thermoplastic resin according to the present invention includes (A1) a polyamide resin and (A2) a polyester resin.

(A1) Polyamide resin

A polyamide resin according to one embodiment of the invention may be selected from among typical polyamide resins applicable to fibers.

The polyamide resin includes: an aliphatic polyamide resin, such as polyamide 66, polyamide 6, and the like; a semi-aromatic polyamide resin which may be obtained through polymerization of a dicarboxylic acid component including an aromatic dicarboxylic acid, such as polyamide 6T, and a diamine component including an aliphatic diamine; or combinations thereof.

In some embodiments, the polyamide resin may have an intrinsic viscosity (IV) of about 0.88 dL/g to about 1.3 dL/g, for example, about 0.9 dL/g to about 1.1 dL/g, as measured in a sulfuric acid solution (concentration: 98%) at 35°C using an Ubbelohde viscometer. Within this range, the thermoplastic resin composition has good mechanical properties and may be suitable for synthetic fibers.

(A2) Polyester resin

According to one embodiment of the invention, the polyamide resin may be selected from typical polyester resins applicable to fibers. For example, the polyester resin may be obtained through polycondensation of a dicarboxylic acid component, for example, an aromatic dicarboxylic acid, such as terephthalic acid (TPA), isophthalic acid (IPA), 1,2-naphthalene dicarboxylic acid, 1,4-naphthalene dicarboxylic acid, 1,5-naphthalene dicarboxylic acid, 1,6-naphthalene dicarboxylic acid, 1,7-naphthalene dicarboxylic acid, 1,8-naphthalene dicarboxylic acid, 2,3-naphthalene dicarboxylic acid, 2,6-naphthalene dicarboxylic acid, 2,7-naphthalenedicarboxylic acid, and the like, and an aromatic dicarboxylate, such as dimethyl terephthalate (DMT), dimethyl isophthalate, dimethyl-1,2-naphthalate, dimethyl-1,5-naphthalate, dimethyl-1,7-naphthalate, dimethyl-1,7-naphthalate, dimethyl-1,8-naphthalate, dimethyl-2,3-naphthalate, dimethyl-2,6-naphthalate, dimethyl-2,7-naphthalate, and the like, with a diol component, such as ethylene glycol, 1,2-propylene glycol, 1,3-propylene glycol, 2,2-dimethyl-1,3-propane diol, 1,3-butane diol, 1,4-butane diol, 1,5-pentane diol, 1,5-pentane diol, 1,6-hexane diol, and the like.

In some embodiments, the polyester resin may have an intrinsic viscosity (IV) of about 1.18 dL/g to about 1.22 dL/g, as measured in an o-chlorophenol solution (concentration: 0.5 g/dl) at 35°C. Within this range, the thermoplastic resin composition has good mechanical properties and may be suitable for synthetic fibers.

The thermoplastic resin according to the embodiment may include the polyamide resin or the polyester resin alone, or may include a combination thereof. In the combination, the polyamide resin and the polyester resin may be present in a weight ratio of about 1:99 to about 99:1.

(B) Zinc oxide

The zinc oxide according to the present invention serves to improve weather resistance and antibacterial properties of the thermoplastic resin composition, and has a peak intensity ratio (B/A) of about 0.01 to about 1.0, for example, about 0.1 to about 1.0, specifically about 0.2 to about 0.7, where A indicates a peak in the wavelength range of 370 nm to 390 nm and B indicates a peak in the wavelength range of 450 nm to 600 nm in photoluminescence measurement. If the peak intensity ratio (B/A) of the zinc oxide is less than about 0.01, the thermoplastic resin composition can have poor antibacterial properties. If the peak intensity ratio (B/A) of the zinc oxide exceeds about 1.0, there can be a problem of initial discoloration of the thermoplastic resin and the thermoplastic resin composition can suffer from deterioration in weather resistance and the like.

In some embodiments, the zinc oxide may have various shapes, for example, a spherical shape, a plate shape, a rod shape, and combinations thereof. In addition, the zinc oxide has an average particle diameter (D50) of about 0.8 $\mu$m to about 3 $\mu$m, for example, about 1 $\mu$m to about 3 $\mu$m, as measured in a single particle state (not forming a secondary particle through agglomeration of particles) using a particle size analyzer (Laser Diffraction Particle Size Analyzer LS I3 320, Beckman Coulter Co., Ltd.). If the average particle diameter (D50) of the zinc oxide is less than about 0.8 $\mu$m, the thermoplastic resin composition can suffer from deterioration in discoloration resistance (weather resistance) and the like, and if the average particle diameter (D50) of the zinc oxide exceeds about 3 $\mu$m, the thermoplastic resin composition can suffer from deterioration in impact resistance and the like.

The zinc oxide has a peak position degree ($2\theta$) in the range of about 35° to about 37° and a crystallite size of about 1,000 Å to about 2,000 Å, for example, about 1,200 Å to about 1,800 Å, in X-ray diffraction (XRD) analysis, as calculated by Scherrer's equation (Equation 1) with reference to a measured FWHM value (full width at half maximum of a diffraction peak). Within this range, the thermoplastic resin composition can have good initial color, weather resistance (discoloration resistance), antibacterial properties, and balance between mechanical properties.

<Equation 1>

$$\text{Crystallite size (D)} = \frac{K\lambda}{\beta \cos\theta}$$

where K is a shape factor, $\lambda$ is an X-ray wavelength, $\beta$ is an FWHM value (degree) of an X-ray diffraction peak, and $\theta$ is a peak position degree.

In some embodiments, the zinc oxide may have a BET specific surface area of about 10 $m^2$/g or less, for example, about 1 $m^2$/g to about 7 $m^2$/g, as measured by a nitrogen gas adsorption method using a BET analyzer (Surface Area and Porosity Analyzer ASAP 2020, Micromeritics Co., Ltd.), and a purity of about 99% or more. Within this range, the thermoplastic resin composition can have good discoloration resistance and mechanical properties.

In some embodiments, the zinc oxide may be prepared by melting metallic zinc in a reactor, heating the molten zinc to about 850°C to about 1,000°C, for example, about 900°C to about 950°C, to vaporize the molten zinc, injecting oxygen gas into the reactor, cooling the reactor to about 20°C to about 30°C, and heating the reactor to about 400°C to about 900°C, for example, 500°C to about 800°C, for about 30 minutes to about 150 minutes, for example, about 60 minutes to about 120 minutes.

In some embodiments, the zinc oxide may be present in an amount of about 1 part by weight to about 5 parts by weight, for example, about 2 parts by weight to about 4 parts by weight, relative to about 100 parts by weight of the rubber-modified aromatic vinyl copolymer resin. If the amount of the zinc oxide is less than about 1 part by weight relative to about 100 parts by weight of the rubber-modified aromatic vinyl copolymer resin, the thermoplastic resin composition can have poor weather resistance and antibacterial properties. If the amount of the zinc oxide exceeds about 5 parts by weight, the thermoplastic resin composition can have poor mechanical properties.

The thermoplastic resin composition according to one embodiment of the invention may further include additives used in typical thermoplastic resin compositions. Examples of the additives may include flame retardants, fillers, antioxidants, anti-dripping agents, lubricants, release agents, nucleating agents, antistatic agents, pigments, dyes, and combinations thereof, without being limited thereto. The additives may be present in an amount of about 0.001 parts by weight to about 40 parts by weight, for example, about 0.1 parts by weight to about 10 parts by weight, relative to about 100 parts by weight of the thermoplastic resin.

The thermoplastic resin composition according to the present invention may be prepared in pellet form by mixing the aforementioned components, followed by melt extrusion in a typical twin-screw extruder at about 200°C to about 280°C, for example, about 220°C to about 250°C.

In some embodiments, the thermoplastic resin composition may have a color variation ($\Delta E$) of about 2 to about 7, for example, about 3 to about 6, as calculated according to Equation 2 based on initial color values ($L_0^*$, $a_0^*$, $b_0^*$) measured on an injection-molded specimen having a size of 50 mm $\times$ 90 mm $\times$ 2.5 mm using a colorimeter and color values ($L_1^*$, $a_1^*$, $b_1^*$) of the specimen measured in the same manner as above after testing for 3,000 hours in accordance with ASTM D4459.

[Equation 2]

$$\text{Color variation } (\Delta E) = \sqrt{(\Delta L^*)^2 + (\Delta a^*)^2 + (\Delta b^*)^2}$$

where $\Delta L^*$ is a difference ($L_1^*$-$L_0^*$) between L* values before and after testing, $\Delta a^*$ is a difference ($a_1^*$-$a_0^*$) between a* values before and after testing, and $\Delta b^*$ is a difference ($b_1^*$-$b_0^*$) between b* values before and after testing.

In some embodiments, the thermoplastic resin composition has an antibacterial effect against various bacteria, such as *Staphylococcus aureus, Escherichia coli, Bacillus subtilis, Pseudomonas aeruginosa, Salmonella, Pneumococcus,* and methicillin-resistant *Staphylococcus Aureus* (MRSA), and may have an antibacterial activity of about 2 to about 7, for example, about 2 to about 5, against each of *Staphylococcus aureus* and *Escherichia coli,* as calculated according to Equation 3 after inoculation of 5 cm $\times$ 5 cm specimens with *Staphylococcus aureus* and *Escherichia coli,* respectively, and culturing under conditions of 35°C and 90% RH for 24 hours in accordance with JIS Z 2801.

[Equation 3]

$$\text{Antibacterial activity} = \log(M1/M2)$$

where M1 is the number of bacteria as measured on a blank specimen after culturing for 24 hours and M2 is the number of bacteria as measured on each of the specimens of the thermoplastic resin composition after culturing for 24 hours.

Here, the "blank specimen" refers to a control specimen for comparison with a test specimen (specimen of the thermoplastic resin composition). Specifically, the blank specimen is prepared by inoculating an empty petri dish, which is suitable for checking whether the inoculated bacteria grow normally, with bacteria, followed by culturing for 24 hours under the same conditions as the test specimen. Antibacterial performance of the test specimen is evaluated based on comparison of the number of cultured bacteria between the blank specimen and the test specimen. Here, the "number of cultured bacteria" may be determined through a process in which each specimen is inoculated with the bacteria, followed by culturing for 24 hours, and then an inoculation solution of the bacteria is recovered and diluted, followed by growing the bacteria into a colony on a culture dish. When population of the colony is too large to count, the number of cultured bacteria may be determined by dividing the colony divided into multiple sectors, measuring the population size of one sector, and converting the measured value into total population.

A molded product according to the present invention is formed of the thermoplastic resin composition set forth above. The thermoplastic resin composition may be prepared in pellet form. The prepared pellets may be produced into various molded products (articles) by various molding methods, such as injection molding, extrusion, vacuum molding, and casting. These molding methods are well known to those skilled in the art. The molded product has good weather resistance, antibacterial properties, mechanical properties, and balance therebetween and thus can be advantageously used as antibacterial products, particularly, antibacterial synthetic fibers, which are frequently touched by the human body and thus require antibacterial properties.

[Mode for Invention]

Next, the present invention will be described in more detail with reference to some examples. It should be understood that these examples are provided for illustration only and are not to be in any way construed as limiting the invention.

**EXAMPLE**

Details of components used in Examples and Comparative Examples are as follows:

(A) Thermoplastic resin

(A1) Polyamide resin
Polyamide 66 (Manufacturer: Rhodia Co., Ltd., Product Name: STABAMID 23AE1K) was used.
(A2) Polyester resin
Polybutylene terephthalate (PBT, Manufacturer: Shinkong Synthetic Fibers Co., Product Name: SHINITE® PBTD201) was used.

(B) Zinc oxide

(B1) Metallic zinc was melted in a reactor, followed by heating to 900°C to vaporize the molten zinc, and then oxygen gas was injected into the reactor, followed by cooling to room temperature (25°C) to obtain an intermediate. Then, the intermediate was subjected to heat treatment at 750°C for 90 minutes, followed by cooling to room temperature (25°C), thereby preparing zinc oxide.
(B2) Zinc oxide (Manufacturer: Ristecbiz Co., Ltd., product name: RZ-950) was used.
(B3) Zinc oxide (Manufacture: Hanil Chemical Ind Co., Ltd., product name: TE30) was used.

For each of the zinc oxides B1, B2, B3, average particle diameter, BET surface area, purity, peak intensity ratio (B/A) of peak B in the wavelength range of 450 nm to 600 nm to peak A in the wavelength range of 370 nm to 390 nm in photoluminescence measurement, and crystallite size were measured. Results are shown in Table 1.

Table 1

|  | (B1) | (B2) | (B3) |
|---|---|---|---|
| Average particle diameter ($\mu$m) | 1.2 | 0.890 | 3.7 |
| BET surface area (m$^2$/g) | 4 | 15 | 14 |
| Purity (%) | 99 | 97 | 97 |
| PL peak intensity ratio (B/A) | 0.28 | 9.8 | 9.5 |
| Crystallite size (Å) | 1417 | 503 | 489 |

Property Evaluation

(1) Average particle diameter (unit: $\mu$m): Average particle diameter (volume average) was measured using a particle size analyzer (Laser Diffraction Particle Size Analyzer LS I3 320, Beckman Coulter Co., Ltd.).
(2) BET surface area (unit: m$^2$/g): BET surface area was measured by a nitrogen gas adsorption method using a BET analyzer (Surface Area and Porosity Analyzer ASAP 2020, Micromeritics Co., Ltd.).

(3) Purity (unit: %): Purity was measured by thermogravimetric analysis (TGA) based on the weight of remaining material at 800°C.

(4) PL peak intensity ratio (B/A): Spectrum emitted upon irradiation of a specimen using a He-Cd laser (KIMMON, 30 mW) at a wavelength of 325 nm at room temperature was detected by a CCD detector in a photoluminescence measurement method, in which the CCD detector was maintained at -70°C. A peak intensity ratio (B/A) of peak B in the wavelength range of 450 nm to 600 nm to peak A in the wavelength range of 370 nm to 390 nm was measured. Here, an injection molded specimen was irradiated with laser beams without separate treatment upon PL analysis, and zinc oxide powder was compressed in a pelletizer having a diameter of 6 mm to prepare a flat specimen.

(5) Crystallite size (unit: Å): Crystallite size was measured using a high-resolution X-ray diffractometer (PRO-MRD, X'pert Inc.) at a peak position degree ($2\theta$) in the range of 35° to 37° and calculated by Scherrer's equation (Equation 1) with reference to a measured FWHM value (full width at half maximum of a diffraction peak). Here, both a powder form and an injection molded specimen could be measured. For more accurate analysis, the injection molded specimen was subjected to heat treatment in air at 600°C for 2 hours to remove a polymer resin therefrom before XRD analysis.

[Equation 1]

$$\text{Crystallite size (D)} = \frac{K\lambda}{\beta\cos\theta}$$

where K is a shape factor, $\lambda$ is an X-ray wavelength, $\beta$ is an FWHM value (degree) of an X-ray diffraction peak, and $\theta$ is a peak position degree.

**Examples 1 to 4 and Comparative Examples 1 to 8**

The aforementioned components were mixed in amounts as listed in Tables 2 and 3, followed by extrusion at 230°C, thereby preparing a thermoplastic resin composition in pellet form. Here, extrusion was performed using a twin-screw extruder (L/D: 36, $\Phi$: 45 mm). The prepared pellets were dried at 80°C for 4 hours or more and then subjected to injection molding using a 6 oz. injection machine (molding temperature: 230°C, mold temperature: 60°C), thereby preparing a specimen. The prepared specimen was evaluated as to the following properties. Results are shown in Tables 2 and 3.

Property evaluation

(1) Weather resistance (color variation ($\Delta E$)): For determination of color variation, initial color values $L_0^*$, $a_0^*$, $b_0^*$ were measured on an injection molded specimen having a size of 50 mm×90 mm×2.5 mm using a colorimeter (KONICA MINOLTA, CM-3700A), followed by testing for 3,000 hours in accordance with ASTM D4459, and then color values $L_1^*$, $a_1^*$, $b_1^*$ of the specimen were measured in the same manner as above. Thereafter, color variation ($\Delta E$) was calculated according to Equation 2:

[Equation 2]

$$\text{Color variation (}\Delta E\text{)} = \sqrt{(\Delta L^*)^2 + (\Delta a^*)^2 + (\Delta b^*)^2}$$

where $\Delta L^*$ is a difference ($L_1^*$-$L_0^*$) between L* values before and after testing, $\Delta a^*$ is a difference ($a_1^*$-$a_0^*$) between a* values before and after testing, and $\Delta b^*$ is a difference ($b_1^*$-$b_0^*$) between b* values before and after testing.

(2) Antibacterial activity: In accordance with JIS Z 2801, 5 cm×5 cm specimens were inoculated with *Staphylococcus aureus* and *Escherichia coli,* respectively, and subjected to culturing under conditions of 35°C and 90% RH for 24 hours, followed by calculation of antibacterial activity according to Equation 3:

[Equation 3]

$$\text{Antibacterial activity} = \log(M1/M2)$$

where M1 is the number of bacteria as measured on a blank specimen after culturing for 24 hours and M2 is the number of bacteria as measured on each of the specimens after culturing for 24 hours.

(3) Notched Izod impact strength (unit: kgf·cm/cm): Notched Izod impact strength was measured on a 1/8" thick Izod specimen in accordance with ASTM D256.

Table 2

|  | Example | | | |
|---|---|---|---|---|
|  | 1 | 2 | 3 | 4 |
| (A1) (parts by weight) | 100 | 100 | - | - |
| (A2) (parts by weight) | - | - | 100 | 100 |
| (B1) (parts by weight) | 2 | 4 | 2 | 4 |
| (B2) (parts by weight) | - | - | - | - |
| (B3) (parts by weight) | - | - | - | - |
| Weather resistance (ΔE) | 5.2 | 3.6 | 5.5 | 3.9 |
| Antibacterial activity (*Escherichia coli*) | 6.3 | 6.2 | 6.1 | 6.3 |
| Antibacterial activity (*Staphylococcus aureus*) | 4.6 | 4.6 | 4.6 | 4.6 |
| Notched Izod impact strength | 3.1 | 2.7 | 3.5 | 3.0 |

Table 3

|  | Comparative Example | | | | | | | |
|---|---|---|---|---|---|---|---|---|
|  | 1 | 2 | 3 | 4 | 5 | 6 | 7 | 8 |
| (A1) (parts by weight) | 100 | 100 | 100 | 100 | - | - | - | - |
| (A2) (parts by weight) | - | - | - | - | 100 | 100 | 100 | 100 |
| (B1) (parts by weight) | 0.5 | 6 | - | - | 0.5 | 6 | - | - |
| (B2) (parts by weight) | - | - | 2 | 4 | - | - | - | - |
| (B3) (parts by weight) | - | - | - | - | - | - | 2 | 4 |
| Weather resistance (ΔE) | 7.2 | 2.5 | 7.6 | 8.2 | 7.5 | 2.6 | 8.4 | 9.6 |
| Antibacterial activity *(Escherichia coli)* | 1.2 | 6.2 | 6.1 | 6.3 | 0.8 | 6.3 | 6.1 | 6.2 |
| Antibacterial activity *(Staphylococcus aureus)* | 0.8 | 4.6 | 4.6 | 4.6 | 0.6 | 4.6 | 4.6 | 4.6 |
| Notched Izod impact strength | 3.2 | 1.8 | 2.1 | 1.6 | 3.8 | 2.0 | 2.2 | 1.8 |

From the above results, it could be seen that the thermoplastic resin compositions according to the present invention had good weather resistance (color variation (ΔE)), antibacterial properties (antibacterial activity), mechanical properties (notched Izod impact strength), and the like.

Conversely, it could be seen that the thermoplastic resin compositions of Comparative Examples 1 and 5 each prepared using an insufficient amount of the zinc oxide suffered from deterioration in antibacterial properties, weather resistance, and the like; the thermoplastic resin compositions of Comparative Examples 2 and 6 each prepared using an excess of the zinc oxide suffered from deterioration in mechanical properties (impact resistance) and the like; the thermoplastic resin compositions of Comparative Examples 3 and 4 each prepared using zinc oxide B2 suffered from deterioration in weather resistance and mechanical properties; and the thermoplastic resin compositions of Comparative Examples 7 and 8 each prepared using zinc oxide B3 also suffered from deterioration in weather resistance and mechanical properties.

**Claims**

1. A thermoplastic resin composition comprising:

   100 parts by weight of a thermoplastic resin comprising at least one of a polyamide resin and a polyester resin; and 1 part by weight to 5 parts by weight of zinc oxide,
   wherein the zinc oxide has an average particle diameter (D50) of 0.8 μm to 3 μm, as measured using a particle size analyzer; a peak intensity ratio (B/A) of 0.01 to 1.0, where A indicates a peak in the wavelength range of 370 nm to 390 nm and B indicates a peak in the wavelength range of 450 nm to 600 nm in photoluminescence measurement; a peak position degree ($2\theta$) in the range of 35° to 37°; and a crystallite size of 1,000 Å to 2,000 Å in X-ray diffraction (XRD) analysis (measured using a high-resolution X-ray diffractometer (PRO-MRD, X'pert Inc.), as calculated by Equation 1:

   [Equation 1]

   $$\text{Crystallite size (D)} = \frac{K\lambda}{\beta\cos\theta}$$

   where K is a shape factor, $\lambda$ is an X-ray wavelength, $\beta$ is an FWHM (full width at half maximum of a diffraction peak) value (degree) of an X-ray diffraction peak, and $\theta$ is a peak position degree, and
   wherein the polyamide resin comprises an aliphatic polyamide resin, a semi-aromatic polyamide resin, or a combination thereof and the polyester resin comprises at least one of polyethylene terephthalate, polybutylene terephthalate, polyethylene naphthalate, polytrimethylene terephthalate, and polycyclohexylene terephthalate.

2. The thermoplastic resin composition according to claim 1, wherein the zinc oxide has a peak intensity ratio (B/A) of 0.1 to 1.0, where A indicates a peak in the wavelength range of 370 nm to 390 nm and B indicates a peak in the wavelength range of 450 nm to 600 nm in photoluminescence measurement.

3. The thermoplastic resin composition according to claim 1 or 2, wherein the zinc oxide has an average particle diameter (D50) of 1 μm to 5 μm, as measured using a particle size analyzer.

4. The thermoplastic resin composition according to any one of claims 1 to 3, wherein the zinc oxide has a BET specific surface area of 10 $m^2$/g or less, as measured by a nitrogen gas adsorption method using a BET analyzer.

5. The thermoplastic resin composition according to any one of claims 1 to 4, wherein the zinc oxide has a BET specific surface area of 1 $m^2$/g to 7 $m^2$/g, as measured by a nitrogen gas adsorption method using a BET analyzer.

6. The thermoplastic resin composition according to any one of claims 1 to 5, wherein the thermoplastic resin composition has a color variation ($\Delta E$) of 2 to 7, as calculated according to Equation 2 based on initial color values ($L_0^*$, $a_0^*$, $b_0^*$) measured on an injection-molded specimen having a size of 50 mm×90 mm×2.5 mm using a colorimeter and color values ($L_1^*$, $a_1^*$, $b_1^*$) of the specimen measured in the same manner as above after testing for 1,500 hours in accordance with ASTM D4459,

   [Equation 2]

   $$\text{Color variation } (\Delta E) = \sqrt{(\Delta L^*)^2 + (\Delta a^*)^2 + (\Delta b^*)^2}$$

   where $\Delta L^*$ is a difference ($L_1^*-L_0^*$) between L* values before and after testing, $\Delta a^*$ is a difference ($a_1^*-a_0^*$) between a* values before and after testing, and $\Delta b^*$ is a difference ($b_1^*-b_0^*$) between b* values before and after testing.

7. The thermoplastic resin composition according to any one of claims 1 to 6, wherein the thermoplastic resin composition has an antibacterial activity of 2 to 7 against each of *Staphylococcus aureus* and *Escherichia coli,* as calculated according to Equation 3 after inoculation of 5 cm×5 cm specimens with *Staphylococcus aureus* and *Escherichia coli,* respectively, and culturing under conditions of 35°C and 90% RH for 24 hours in accordance with JIS Z 2801,

[Equation 3]

Antibacterial activity = log(M1/M2)

where M1 is the number of bacteria as measured on a blank specimen after culturing for 24 hours and M2 is the number of bacteria as measured on each of the specimens of the thermoplastic resin composition after culturing for 24 hours.

8. A molded product formed of the thermoplastic resin composition according to any one of claims 1 to 7.

9. The molded product according to claim 8, wherein the molded product comprises synthetic fibers.


**Patentansprüche**

1. Thermoplastische Harzzusammensetzung, umfassend:

100 Gewichtsteile eines thermoplastischen Harzes, das mindestens eines aus einem Polyamidharz und einem Polyesterharz umfasst; und
1 Gewichtsteil bis 25 Gewichtsteile an Zinkoxid,
wobei das Zinkoxid einen durchschnittlichen Partikeldurchmesser (D50) von 0,8 $\mu$m bis 3 $\mu$m, gemessen mit einem Partikelgrößenanalysator; ein Peak-Intensitätsverhältnis (B/A) von 0,01 bis 1,0, wobei A einen Peak im Wellenlängenbereich von 370 nm bis 390 nm angibt und B einen Peak im Wellenlängenbereich von 450 nm bis 600 nm bei der Photolumineszenzmessung angibt; einen Peak-Positionsgrad ($2\theta$) im Bereich von 35° bis 37°; und eine Kristallitgröße von 1.000 Å bis 2.000 Å in der Röntgenbeugungsanalyse (XRD) aufweist (gemessen mit einem hochauflösenden Röntgendiffraktometer (PRO-MRD, X'pert Inc.), berechnet gemäß Gleichung 1:

[Gleichung 1]

$$\text{Kristallit Größe (D)} = \frac{K\lambda}{\beta\cos\theta}$$

wobei K ein Formfaktor ist, $\lambda$ eine Röntgenwellenlänge ist, $\beta$ ein FWHM-Wert (Grad) (volle Breite bei halbem Maximum eines Beugungspeaks) eines Röntgenbeugungspeaks ist und $\theta$ ein Peak-Positionsgrad ist, und wobei das Polyamidharz ein aliphatisches Polyamidharz, ein halbaromatisches Polyamidharz oder eine Kombination davon umfasst und das Polyesterharz mindestens eines aus Polyethylenterephthalat, Polybutylenterephthalat, Polyethylennaphthalat, Polytrimethylenterephthalat und Polycyclohexylenterephthalat umfasst.

2. Thermoplastische Harzzusammensetzung nach Anspruch 1, wobei das Zinkoxid ein Peak-Intensitätsverhältnis (B/A) von 0,1 bis 1,0 aufweist, wobei A einen Peak im Wellenlängenbereich von 370 nm bis 390 nm angibt und B einen Peak im Wellenlängenbereich von 450 nm bis 600 nm bei der Photolumineszenzmessung angibt.

3. Thermoplastische Harzzusammensetzung nach Anspruch 1 oder 2, wobei das Zinkoxid einen durchschnittlichen Partikeldurchmesser (D50) von 1 $\mu$m bis 5 $\mu$m aufweist, gemessen mit einem Partikelgrößenanalysator.

4. Thermoplastische Harzzusammensetzung nach einem der Ansprüche 1 bis 3, wobei das Zinkoxid eine BET-spezifische Oberfläche von 10 m$^2$/g oder weniger aufweist, gemessen durch ein Stickstoffgas-Adsorptionsverfahren unter Verwendung eines BET-Analysators.

5. Thermoplastische Harzzusammensetzung nach einem der Ansprüche 1 bis 4, wobei das Zinkoxid eine BET-spezifische Oberfläche von 1 m$^2$/g bis 7 m$^2$/g aufweist, gemessen durch ein Stickstoffgas-Adsorptionsverfahren unter Verwendung eines BET-Analysators.

6. Thermoplastische Harzzusammensetzung nach einem der Ansprüche 1 bis 5, wobei die thermoplastische Harzzusammensetzung einen Farbunterschied ($\Delta E$) von 2 bis 7 aufweist, wie gemäß Gleichung 2 basierend auf anfänglichen Farbwerten ($L_0^*$, $a_0^*$, $b_0^*$) berechnet, gemessen an einer Spritzgussprobe mit einer Größe von 50 mm $\times$ 90 mm $\times$ 2,5 mm unter Verwendung eines Kolorimeters und Farbwerten ($L_1^*$, $a_1^*$, $b_1^*$) der Probe, die mit dem Kolorimeter nach einer Prüfdauer von 1.500 Stunden gemäß ASTM D4459 auf dieselbe Weise gemessen wurde,

[Gleichung 2]

$$\text{Farbe Variation } (\Delta E) = \sqrt{(\Delta L^*)^2 + (\Delta a^*)^2 + (\Delta b^*)^2}$$

wobei $\Delta L^*$ eine Differenz ($L_1^*$-$L_0^*$) zwischen L*-Werten vor und nach der Prüfung ist; $\Delta a^*$ eine Differenz ($a_1^*$-$a_0^*$) zwischen a*-Werten vor und nach der Pürfung ist; und $\Delta b^*$ eine Differenz ($b_1^*$-$b_0^*$) zwischen b*-Werten vor und nach der Prüfung ist.

7. Thermoplastische Harzzusammensetzung nach einem der Ansprüche 1 bis 6, wobei die thermoplastische Harzzusammensetzung eine antibakterielle Wirkung von 2 bis 7 gegen jeweils *Staphylococcus aureus* und *Escherichia coli* aufweist, wie gemäß Gleichung 3 nach der Inokulation von 5 cm $\times$ 5 cm-Proben mit *Staphylococcus aureus* und *Escherichia coli* berechnet und Kultivierung unter Bedingungen von 35 °C und 90 % RH für 24 Stunden gemäß JIS Z 2801,

[Gleichung 3]

Antibakterielle Wirkung = log(M1/M2)

wobei M1 die Anzahl der Bakterien ist, die an einer Blindprobe nach einer Kultivierung von 24 Stunden gemessen wurde, und M2 die Anzahl der Bakterien ist, die an jeder der Proben der thermoplastischen Harzzusammensetzung nach einer Kultivierung von 24 Stunden gemessen wurde.

8. Formartikel, der aus der thermoplastischen Harzzusammensetzung nach einem der Ansprüche 1 bis 7 hergestellt ist.

9. Formartikel nach Anspruch 8, wobei der Formartikel synthetische Fasern umfasst.

**Revendications**

1. Composition de résine thermoplastique comprenant :

100 parties en poids d'une résine thermoplastique comprenant au moins l'une parmi une résine polyamide et une résine polyester ; et
1 partie en poids à 5 parties en poids d'oxyde de zinc,
dans laquelle l'oxyde de zinc a un diamètre de particule moyen (D50) allant de 0,8 $\mu$m à 3 $\mu$m, tel que mesuré en utilisant un analyseur de taille de particules ; un rapport d'intensité de pic (B/A) allant de 0,01 à 1,0, où A indique un pic dans la plage de longueurs d'onde allant de 370 nm à 390 nm et B indique un pic dans la plage de longueurs d'onde allant de 450 nm à 600 nm dans une mesure de photoluminescence, un degré de position de pic ($2\theta$) dans la plage allant de 35° à 37° ; et une taille de cristallites allant de 1000 Å à 2000 Å en analyse par diffraction des rayons X (XRD) (mesurée en utilisant un diffractomètre à rayons X haute résolution (PRO-MRD, X'pert Inc.), telle que calculée par l'équation 1 :

[Équation 1]

$$\text{Taille de cristallites } (D) = \frac{K\lambda}{\beta\cos\theta}$$

où K est un facteur de forme, $\lambda$ est une longueur d'onde des rayons X, $\beta$ est une valeur (degré) de FWHM (largeur totale à mi-hauteur d'un pic de diffraction) d'un pic de diffraction des rayons X et $\theta$ est un degré de position de pic, et
dans laquelle la résine polyamide comprend une résine polyamide aliphatique, une résine polyamide semi-aromatique ou une combinaison de celles-ci, et la résine polyester comprend au moins l'un parmi le polyéthylène téréphtalate, le polybutylène téréphtalate, le polyéthylène naphtalate, le polytriméthylène téréphtalate et le polycyclohexylène téréphtalate.

2. Composition de résine thermoplastique selon la revendication 1, dans laquelle l'oxyde de zinc a un rapport d'intensité de pic (B/A) allant de 0,1 à 1,0, où A indique un pic dans la plage de longueurs d'onde allant de 370 nm à 390 nm et B indique un pic dans la plage de longueurs d'onde allant de 450 nm à 600 nm dans une mesure de photoluminescence.

3. Composition de résine thermoplastique selon la revendication 1 ou 2, dans laquelle l'oxyde de zinc a un diamètre de particule moyen (D50) allant de 1 $\mu$m à 5 $\mu$m, tel que mesuré en utilisant un analyseur de taille de particules.

4. Composition de résine thermoplastique selon l'une quelconque des revendications 1 à 3, dans laquelle l'oxyde de zinc a une surface spécifique BET inférieure ou égale à 10 m$^2$/g, telle que mesurée par un procédé d'adsorption d'azote gazeux en utilisant un analyseur BET.

5. Composition de résine thermoplastique selon l'une quelconque des revendications 1 à 4, dans laquelle l'oxyde de zinc a une surface spécifique BET allant de 1 m$^2$/g à 7 m$^2$/g, telle que mesurée par un procédé d'adsorption d'azote gazeux en utilisant un analyseur BET.

6. Composition de résine thermoplastique selon l'une quelconque des revendications 1 à 5, dans laquelle la composition de résine thermoplastique a une variation de couleur ($\Delta$E) allant de 2 à 7, telle que calculée selon l'équation 2 sur la base des valeurs de couleur initiale ($L_0^*$, $a_0^*$, $b_0^*$) mesurées sur un spécimen moulé par injection ayant une taille de 50 mm x 90 mm x 2,5 mm en utilisant un colorimètre et des valeurs de couleur ($L_1^*$, $a_1^*$, $b_1^*$) du spécimen mesurées de la même manière que ci-dessus après un test pendant 1500 heures conformément à la norme ASTM D4459,

[Équation 2]

$$\text{Variation de couleur } (\Delta E) = \sqrt{(\Delta L^*)^2 + (\Delta a^*)^2 + (\Delta b^*)^2}$$

où $\Delta L^*$ est une différence ($L_1^*$-$L_0^*$) entre les valeurs L* avant et après le test, $\Delta a^*$ est une différence ($a_1^*$-$a_0^*$) entre les valeurs a* avant et après le test, et $\Delta b^*$ est une différence ($b_1^*$-$b_0^*$) entre les valeurs b* avant et après le test.

7. Composition de résine thermoplastique selon l'une quelconque des revendications 1 à 6, dans laquelle la composition de résine thermoplastique a une activité antibactérienne allant de 2 à 7 contre chacun de *Staphylococcus aureus* et *Escherichia coli,* telle que calculée selon l'équation 3 après inoculation de spécimens de 5 cm x 5 cm avec *Staphylococcus aureus* et *Escherichia coli,* respectivement, et mise en culture dans des conditions de 35°C et 90% HR pendant 24 heures conformément à la norme JIS Z 2801,

[Équation 3]

$$\text{Activité antibactérienne} = \log(M1/M2)$$

où M1 est le nombre de bactéries tel que mesuré sur un spécimen témoin après une mise en culture pendant 24 heures et M2 est le nombre de bactéries tel que mesuré sur chacun des spécimens de la composition de résine thermoplastique après une mise en culture pendant 24 heures.

8. Produit moulé formé de la composition de résine thermoplastique selon l'une quelconque des revendications 1 à 7.

9. Produit moulé selon la revendication 8, dans lequel le produit moulé comprend des fibres synthétiques.

## REFERENCES CITED IN THE DESCRIPTION

**Patent documents cited in the description**

- KR 100696385
- EP 3315546 A1
- EP 3560902 A1
- JP H10251444 A
- KR 101445304 B1
- KR 101334283 B1
- KR 100683505 B1

**Non-patent literature cited in the description**

- **PRASANNA VL**. Insight into the mechanism of antibacterial activity of ZnO: surface defects mediated reactive oxygen species even in the dark. *Langmuir*, 2015, 9155-9162